# EUROPEAN PATENT APPLICATION

(11) **EP 1 251 071 A1**
(43) Date of publication of application: **23.10.2002**
(21) Application number: 01109744.1
(22) Date of filing: 20.04.2001
(51) Int. Cl.: B65B 1/34, G01G 13/08

(54) **Device for automatically conveying and weighing food articles**

(71) Applicant: D. &V.I. INOX S.R.L., 26020 Agnadello (Cremona) (IT)
(72) Inventor: Damiani, Pasquale, 26020 Agnadello (Cremona) (IT)
(74) Representative: Cicogna, Franco

(57) **Abstract**

A device for automatically conveying and weighing food articles, with high speed filling cycles, comprises a conveyor (2) for loading the food articles on the weighing system, a hopper (11) for conveying and dividing the food articles, a screw (3) for feeding the product, an inner spiral element in the inside of the screw, a movable drawer (5) for providing a volumetric preloading, a pneumatic piston (6) for driving the movable drawer, load cells (7), a driving piston (8) for driving the opening system of the food article vessel (9), a vessel for the weighing operation, and trags (10) for collecting the food articles unloaded from the vessel.

## Description

### BACKGROUND OF THE INVENTION

The present invention relates to a device for automatically conveying and weighing articles in general, by high speed filling-in cycles, which has been specifically designed for the food article industry.

As is known, a very important problem of the food article field in general, is that of providing devices designed for automatizing the food article treatment and packaging processes, to properly package set-weight amount of food articles in vessels or trays made of food article compatible plastics materials.

In particular, a set amount of food articles must be weighed with a very high accuracy, for unloading the weighed food articles into plastics material trays to be conveyed to packaging apparatus.

Flexible approaches would be moreover required for mating the operating path of the loading, conveying, transferring and weight setting system to the increasing industry needs, while allowing the requirements to be at least partially anticipated.

In order to solve the above problem, a lot of food article product processing devices have been already designed; however, this prior devices are not suitable to satisfactorily solve all the above mentioned problems.

The most important problem, in particular, is that the above mentioned prior devices do not allow the food articles to be weighed-filled-in with a high processing speed.

This drawback represents a bottleneck of prior food article processing and packaging methods, and, accordingly, it prevents an automatic food article process to be actually automatized.

### SUMMARY OF THE INVENTION

Accordingly, the aim of the present invention is to provide the food article industry with a device for automatically conveying and weighing articles in general with high speed filling-in cycles, which is suitable to weigh and accurately meter a preset amount of food articles, to unload the processed food articles into alimentary use trays.

This is achieved owing to the fact that the invention provides a succession of serially arranged elements, which, however, work simultaneously in a parallel relationship.

Within the scope of the above mentioned aim, a main object of the present invention is to allow to provide metered food article portions ready for a packaging operation, at a very high packaging speed, and this owing to a very high precision digital setting of the volume and weight of the product amount to be metered in portions.

Another object of the present invention is to provide such a device which, owing to its specifically designed construction, is very reliable and safe in operation and which, moreover, is very competitive from a mere economic standpoint.

According to one aspect of the present invention, the above mentioned aim and objects, as well as yet other objects, which will become more apparent hereinafter, are achieved by a device for automatically weighing and conveying or feeding products in general, with high speed filling cycles, specifically designed for the food article industry, characterized in that said device has a modular construction comprising a plurality of basic elements, operating in series and/or simultaneously in parallel.

### BRIEF DESCRIPTION OF THE DRAWINGS

Further characteristics and advantages of the present invention will become more apparent hereinafter from the following detailed disclosure of a preferred, though not exclusive, embodiment of a device for automatically conveying and weighing products in general, with high speed filling-in cycles, specifically designed for the food article industry, which is illustrated, by way of an indicative, but not limitative example, in the figures of the accompanying drawings, where:

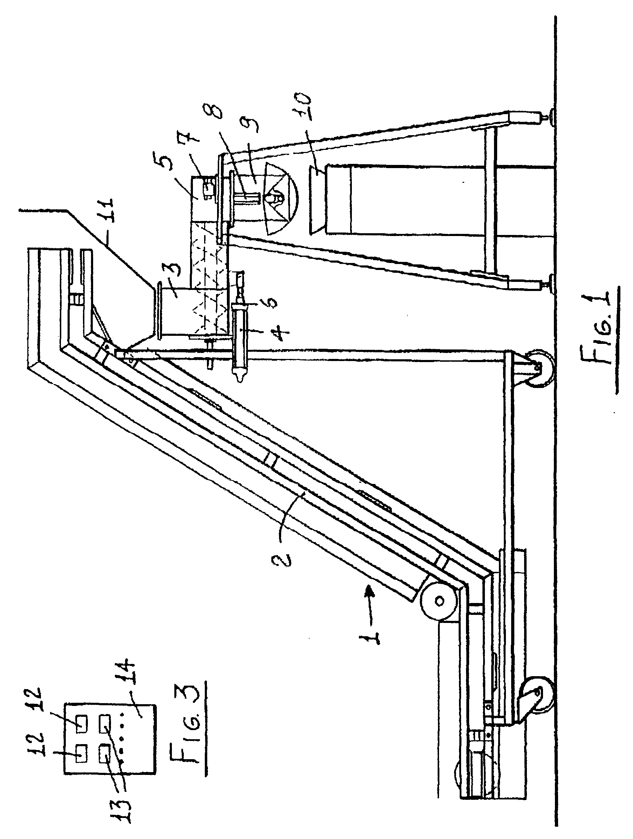

Figure 1 is a general side view of the device for automatically conveying and weighing products in general, with high speed filling cycles, specifically designed for the food article industry, according to the present invention;

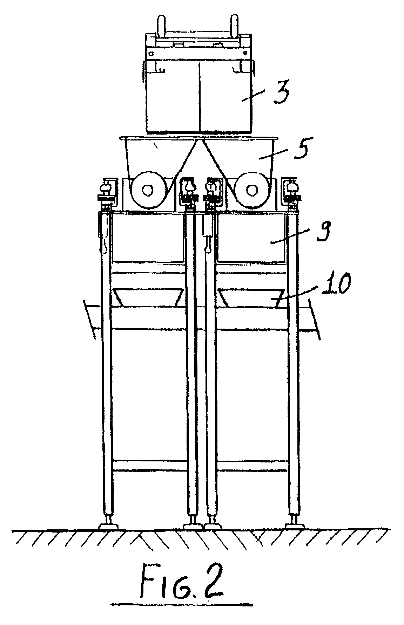

Figure 2 is a detail front view of a subsystem of the device shown in figure 1, comprising a weighing and collecting device, with the related supporting frameworks for supporting food article trays; and
Figure 3 is a further detail front view illustrating an electric drive panel of the composite device shown in figure 1.

### DESCRIPTION OF THE PREFERRED EMBODIMENTS

With reference to the number references of the above mentioned figures, the device for automatically conveying and weighing products in general, with high speed filling cycles, specifically designed for the food article industry, according to the present invention, and which has been generally indicated by the reference number 1, comprises an inlet element 2, operating as a conveyor, for loading the weighing system, a hopper 11, for supplying the food articles or products, a screw 3 for feeding the food articles, a spiral element 4 inside the screw, a movable drawer 5 for volumetrically preloading the system, a pneumatic piston 6 for pneumatically driving the movable drawer 5, load cells 7, a driving piston 8 for driving the opening closure system of the vessel of the food articles to be weighed and a vessel 9, supported on the load cells 7, for receiving the food articles unloaded by the screw 3 during the weighing operation.

The subject device comprises, moreover, a tray 10 for collecting the food articles unloaded from the vessel 9, an electric control or drive panel 14, including a P.L.C. managing the weighing apparatus operating cycles or steps, a plurality of displays 12 for setting and digitally displaying the volume of the food articles present in the preloading movable drawer 5, and a plurality of displays 13 for digitally setting and displaying the weight to be achieved at the end of the operating cycle.

The operation of the device is actuated by setting on the panel 14 the values, respectively, of the preloading volume displayed on the displays 12 and the weight values displayed on the displays 13.

In this connection it should be pointed out that the volume value must be nearest as possible to the value corresponding to a precise value of the set product weight.

At this time, the weighing cycle is energized, which will be performed in a continuous and automatic manner up to a manual stopping thereof.

The conveyor 2, through the loading and dividing hopper 11, will load the screw 3.

The spiral element 4, as it is rotatively driven, loads the preloading drawer 5 depending on a value preset on the display 12.

As the loading value has been achieved, the preloading movable drawer 5 will be backward displaced, under the control of the operating piston 6.

Then, the product will fall into the vessel 9 supported by the loading cells 7, detecting the approximative weight achieved by the previous volumetric preload, and transmitting it to the P.L.C.

Said P.L.C. will rotatively drive, with a varying operating speed, the spiral element 4 which, in turning, will delivery such amounts of products to precisely achieve the metering weight set on the display 13.

After having achieved the desired weight, the P.L.C. further drives the drawer 5 by the operating piston 6 and rotatively drives the spiral element 4, thereby performing the above disclosed preloading operation.

Simultaneously with the preload forming step, the P.L.C. will operate the opening mechanism 8, thereby causing the weighed product to be discharged into the vessel 10.

Then, the P.L.C. will transmit a new pulse the mechanism 8 to cause the latter to be reclosed, while allowing the vessel 9 to be filled-in again.

Upon closing the vessel 9, the preload is formed and, upon achieving the set value, the operating piston 6 will instantaneously open the drawer 5, thereby performing again the above disclosed operating cycle.

From the above disclosure it should be apparent that the invention fully achieves the intended aim and and objects.

In particular, the fact is to be pointed out that a very practical, quick and safe device has been provided, allowing to accurately meter the food articles, upon having set, by an electronic digital system, both the volumetric value and the weight of the above mentioned food articles.

The invention, as disclosed, is susceptible to several modifications and variations, all of which will come within the scope of the invention.

Moreover, all the constructional details can be replaced by other technically equivalent elements.

In practicing the invention, the used materials, as well as the contingent size and shapes, can be any, depending on requirements.

## Claims

1. A device for automatically conveying and weighing products in general, with high speed filling cycles, specifically designed for the food article industry, **characterized in that** said device comprises a conveyor (2) for loading a weighing system, a hopper (11) for conveying and dividing the product to be weighed, a screw (3) for supplying the product, a spiral element (4), inside said screw (3), a movable drawer (5) for a volumetric preloading, a pneumatic piston (6) for driving the movable drawer (5), load cells (7), a pistol (8) for driving a system for opening a vessel of the product to be weighed, a vessel (9) for the weighing step, and trays (10) for collecting the product discharged from said vessel (9).

2. A device for automatically conveying and weighing products in general, according to Claim 1, **characterized in that** said device comprises an electric control panel (14) including a P.L.C. for managing the operating cycles or steps of a weighing apparatus, a plurality of displays (12) for digitally setting and displaying the volume of the product in said preloading drawer (5), and a plurality of displays (13) for digitally setting and displaying a weight to be achieved at the end of the operating cycle.

3. A device for automatically conveying and weighing products in general, with high speed filling cycles, specifically designed for the food article industry, according to the preceding claims, **characterized in that** a conveyor belt (2), a hopper (11) and a screw (3) with an inner spiral element (4) supply by product all the downward arranged weighing system.

4. A device for automatically conveying and weighing products in general, according to one or more of the preceding claims, **characterized in that** said weighing system can be digitally set and **that** the weighing cycles are adjusted by an electronic programmable P.L.C. system.

5. A device for automatically conveying and weighing products in general, according to one or more of the preceding claims, **characterized in that** said weighing system is fully automatized, by product entraining systems, for entraining the product both in a product supply step and in a product ejecting step, upon carrying out the weighing operation and at the end of all the controls.

6. A device for automatically conveying and weighing products in general, with high speed filling cycles, specifically designed for the food article industry, according to one or more of the preceding claims, **characterized in that** the system, jointly to the weight control, performs a volumetric control strictly associated with the weight and in a continuous comparing relationship therewith.

7. A device for automatically conveying and weighing products in general, with high speed filling cycles, specifically designed for the food article industry, according to one or more of the preceding claims, **characterized in that** it is made of metal materials, plastics materials or mixed materials, or any other materials compatible with the hygienic-sanitary requirements imposed by the use field requirements.

8. A device for automatically conveying and weighing products in general, according to one or more of the preceding claims, **characterized in that** said device comprises a panel for setting thereon the values of the preloading volume displayed on the displays (12) and the weight volume displayed on the displays (13).

9. A device for automatically conveying and weighing products in general, according to one or more of the preceding claims, **characterized in that** said device comprises a conveyor which, through a loading and metering hopper, loads said screw.

10. A device for automatically conveying and weighing products in general, according to one or more of the preceding claims, **characterized in that** said device comprises a spiral element (4) which, by turning, loads said preloading drawer (5) depending on a value set on said display (12).

11. A device for automatically conveying and weighing products in general, according to one or more of the preceding claims, **characterized in that** as the load value is achieved, said preloading drawer is backward driven by said piston (6).

12. A device for automatically conveying and weighing products in general, according to one or more of the preceding claims, **characterized in that** the product fall into a vessel (9) supported by the load cells (7) which are suitable to detect the approximative weight of the previous volumetric preload to transmit said volumetric preload value to said P.L.C.

13. A device for automatically conveying and weighing products in general, according to one or more of the preceding claims, **characterized in that** said P.L.C. rotatively drives with a variable speed a spiral element (4) which, by turning, meters the product in such amounts as to accurately achieve the weight of the metered products set on said display (13).

14. A device for automatically conveying and weighing products in general, according to one or more of the preceding claims, **characterized in that** said P.L.C. causes said drawer (5) to advance through the piston (6) and causes said spiral element (4) to turn thereby providing the preloading.

15. A device for automatically conveying and weighing products in general, according to one or more of the preceding claims, **characterized in that** said device comprises a P.L.C. driving the opening mechanism (8) to discharge the previously weighed product into the vessel (10).

16. A device for automatically conveying and weighing products in general, according to one or more of the preceding claims, **characterized in that** said P.L.C. transmits a further pulse to said mechanism (8) and cause said mechanism to be reclosed, thereby allowing said vessel (9) to be filled-in again.

17. A device for automatically conveying and weighing products in general, according to one or more of the preceding claims, **characterized in that** said device, after the closure of said vessel, forms said preload and, as a set value is achieved, said piston (6) causes the drawer (5) to be instantaneously opened thereby performing again the disclosed operating cycle.

18. A device for automatically conveying and weighing products in general with high speed filling cycles, specifically designed for the food article industry, according to one or more of the preceding claims, and all as broadly disclosed and illustrated and for the intended aim and objects.
